# EUROPEAN PATENT SPECIFICATION

(11) **EP 1 123 795 B1**
(45) Date of publication and mention of the grant of the patent: **20.11.2013**
(21) Application number: 01108621.2
(22) Date of filing: 09.07.1996
(51) Int. Cl.: B29C 73/16, B60C 29/06, B05B 7/16, B05B 7/32, B60S 5/04, B60C 5/00

(54) **Apparatus for the sealing and pumping up of tyres**
Vorrichtung zum Dichten und Aufpumpen von Reifen
Appareillage pour obturer et gonfler des bandages pneumatiques

(30) Priority: 11.07.1995 DE 19525233; 08.12.1995 DE 19545935
(43) Date of publication of application: 16.08.2001
(62) Divisional of application: 96305059.6
(73) Proprietor: Sumitomo Rubber Industries, Ltd., Kobe-shi, Hyogo-ken (JP)
(72) Inventor: Gerresheim, Manfred, 61379 Obertshausen-Hausen (DE); Fuchs, Hans-Bernd, 63755 Alzenau-Horstein (DE); Steinbrecht, Ulrich, 64372 Ober-Ramstadt (DE); Stranzky, Norbert, 63517 Rodenbach (DE); Ditzel, Eduard, 63517 Rodenbach (DE); Wolf, Helmut, 63458 Grundau (DE)
(74) Representative: Manitz, Finsterwald & Partner GbR

(56) References cited:
- FR-A- 671 659
- GB-A- 1 255 781
- US-A- 1 411 424
- US-A- 2 926 816
- US-A- 2 991 629
- US-A- 3 047 040
- US-A- 3 568 736

## Description

This invention relates to an apparatus for the application of sealing preparations to the tyre and for pumping it up to a pressure at which it can be used.

Various puncture sealing preparations are available on the market. They mainly contain colloidal dispersions of polymers in an aqueous medium, known in the following as lattices. Thus, for example polystyrene butadiene lattices, poly (vinyl acetate) lattices, acrylic copolymer lattices, nitrile lattices and polychloroprene lattices are used. Sealing preparations are also known which do not contain water but rather tetrachloroethylene as the carrier medium.

The prior art uses, for the introduction of such sealing preparations into a tyre and for pumping up the tyre to a pressure at which it can be used, an apparatus comprising a pressure-tight container for the sealing preparation which contains a liquefied gas as a pressure source. This is referred to as a spray can in the following. A propane/butane mixture is mainly used as the liquefied gas. In rare cases, fluorochlorohydrocarbons are also used. These spray cans have a hose at their outlet valve, the other end of the hose being provided with a screw adapter for the tyre valve.

When a tyre puncture occurs, the sealing preparation is sprayed from the spray can into the interior of the tyre through the tyre valve and the tyre is reinflated by means of the propellant gas to a specific pressure which is of different levels depending on the leak. The tyre is then driven a few kilometres, dependent on the nature of the defect, to distribute the sealing preparation in the interior of the tyre and to seal off the defect.

In another apparatus the sealing preparation is located in a compressible flask which is connected via an adapter to the tyre valve with the valve insert having been previously removed. The sealing preparation is then sprayed into the tyre by pressing the flask. After the insertion of the valve insert, the tyre is then pumped up again to a specific pressure with the aid of carbon dioxide cartridges.

Difficulties arise with the prior art apparatus for introducing the sealing preparation into the interior of the tyre and for pumping up the tyre. Thus, with spray cans which contain propane/butane mixtures as the propellant gas, one can, depending on the mixture ratio, only satisfactorily operate to temperatures down to about 0°C. Furthermore, propane/butane mixtures are combustible and explosive. Fluorochlorohydrocarbons are a burden for the environment. Finally all known propellants are only available in a limited quantity when a puncture occurs.

An apparatus comprising the features of the pre-characterizing portion of claim 1 and claim 4 is known from FR 671 659 A.

The object of the present invention is to provide devices for the successful introduction of the sealing preparation into the tyre and for the pumping up of the tyre to a pressure at which the tyre can be used and which do not have at least one of the above-named disadvantages.

This object is achieved by the features of claim 1 and claim 4, respectively.

Thus in use one embodiment provides a hose with a screw adapter for the tyre valve which is attached to the outlet valve of the pressure-tight container. A liquefied gas which is contained with the sealing preparation in the pressure-tight container serves as the pressure source. Because the liquefied gas, for example a propane/butane mixture, is not capable of operating at low temperatures and/or the sealing preparation freezes, then the content of the pressure-tight container, that is to say the spray can, is heated up with the heat source to ensure effective operation.

The same method is used in the following embodiment. The pressure source is located outside the pressure-tight container separate from the sealing preparation and can, for example, be an air compressor or a pressure flask or several gas cartridges with liquefied or compressed gas. With this embodiment, the pressure-tight container has a gas inlet through which the gas from the pressure flask or from the gas cartridge, or compressed air from the compressor, is introduced into the pressure-tight container. For the purpose, a hose-like connection is provided if required with a pressure relief valve and a throughflow restrictor between the gas inlet of the pressure-tight container and the pressure flask of the air compressor.

In the case of a puncture, the sealing valve in the pressure-tight container is heated up by the heat source, insofar as it has frozen up, as was described above for the spray can. The pressure-tight container is connected to the tyre valve via a hose with a screw adapter connected to the outlet valve of the pressure-tight container. Through the gas introduced from the pressure flask or from the compressor into the pressure-tight container, the sealing preparation is sprayed via the outlet valve and the hose into the interior of the tyre and the tyre is subsequently pumped. Insofar as the gas in the pressure flask is not capable of operating at low temperatures, the pressure flask can also be heated up by a heat source.

The embodiment with the compressor as the pressure source has the additional advantage that an unrestricted gas supply is available. When compared with propane/butane mixtures, the further advantage is obtained, that no danger exists of combustion or explosion. Small air compressors for pumping up motorcar and motorcycle tyres are commercially available. They are designed for pressures up to approximately 12 bar. Naturally, compressors with a lower and higher maximum pressure and also with a lower or higher air conveying volume can be used in the devices of the invention. The compressors can be connected to the cigarette lighter, directly to the battery in the motor vehicle or to another power source.

A heater pad with resistive heating can be used as the heat source and may be wound or laid around the pressure-tight container and/or the pressure flask of the liquefied gas. The heater can also be supplied with power via the cigarette lighter.

Furthermore, the heat source can consist of at least two mutually separated substances which, on mixing, liberate heat of reaction, such as for example heat of neutralisation, heat of solution or heat of hydration. Thus, if required, calcium chloride, by way of example, can be dispensed into a water containing pad or cushion which is for example, wound around the pressure-tight container or the pressure flask to be heated up. Through the heat of hydration the sealing preparation and/or the propellant can be heated up to a temperature at which they are capable of functioning. Naturally, other devices can also be used in place of the cushion, for example, an upwardly open vessel with a jacket filled with water in which the pressure-tight container or the pressure flask which have to be warmed up are placed as required.

A latent heat store which liberates heat on its conversion can also be used as a heat source. In this case, a cushion can also be considered which contains the latent heat store. Substances, which generate heat with a change of the state of aggregation or on phase transitions, can be used as the latent heat store. Thus, for example, cushions can be used which contain a sodium acetate solution. On pressing a metallic platelet, which is likewise contained in the cushion, the sodium acetate crystallises and the heat of crystallisation is liberated.

In another embodiment the apparatus has a pressure-tight container which is provided with an outlet valve and an outlet quantity restrictor and which contains a sealing preparation and liquefied sulphur hexafluoride or dinitrogenoxide as a pressure source for the introduction of the sealing preparation out of the pressure-tight container into the interior of the tyre and also for the reinflation of the tyre.

In this case, pressure-tight containers are used which withstand higher operating pressures than those for propane/butane mixtures. Whereas commercial spray cans which have a maximum permitted operating pressure of about 8 to 18 bar can be used with propane/butane mixtures, a pressure-tight container which is suitable for 25 bar operating pressure is used with sulphur hexafluoride, for example a thick-walled stainless steel container.

For dinitrogenoxide the pressure-tight container must be suitable for operating pressures of about 50 bar. These propellants have the advantage that they are not combustible and can also be used at low temperatures without the aid of a heat source.

The manner of operation is the same as in a spray can. In this case, the outlet valve is also provided with a hose which has a screw adapter for the tyre valve at its end. In addition, an outlet quantity restrictor is provided at the outlet valve in order to be able to effect metering of the sealing preparation at the high pressures.

With another embodiment in accordance with the invention the apparatus has a pressure-tight container containing a sealing preparation and having an outlet valve for the sealing preparation and also a gas inlet to which a pressure source can be connected or is connected from which pressurised gas can be introduced into the pressure-tight container via the gas inlet. An air compressor or a portable pressure vessel of about 5 to 8 1 volume which contains the air in compressed form can be used as the pressure source. The internal pressure of the tank amounts to about 8 to 10 bar. The pressure tank can, for example, be filled up at an air line at a filling station. Furthermore, a pressure flask or several gas cartridges with liquefied or compressed gas can be used as the pressure source. Propane/butane mixtures, sodium hexafluoride, dinitrogenoxide and others can also be used as gases.

When a puncture occurs the pressure-tight container is connected to the tyre valve. For this purposes, the screw adapter which is located at the end of the hose connected to the outlet valve of the pressure-tight container is screwed onto the tyre valve. Insofar as a sealing preparation and/or a gas, designated a propellant gas in the following, are used which are not capable of operation at low temperatures, and if the tyre must be sealed at such temperatures, then the pressure-tight container which contains the sealing preparation and the propellant gas, or the pressure-tight container containing only the sealing preparation and the pressure flask with the propellant gas, can be brought to an operating temperature with the aid of a previously described heat source. This heating up can also be carried out prior to connecting the tyre valve and the pressure-tight container.

On opening of the outlet valve, the sealing preparation is sprayed into the interior of the tyre by the propellant gas which is either located in the pressure-tight container or is supplied to the pressure-tight container via its inlet valve from the pressure flask and the tyre is pumped up to a pressure which depends on the size of the leak. In the embodiment with an air compressor or pressure tank as a pressure source, air is supplied to the pressure-tight contained via its inlet valve on opening of the outlet valve in order to spray the sealing preparation into the interior of the tyre and to pump up the tyre. Thereafter, the apparatus is unscrewed from the tyre valve and the tyre is driven for a few kilometres so that the sealing preparation is distributed around the interior of the tyre and the leak is sealed off. Thereafter, the apparatus is again connected to the tyre valve and again the tyre is pumped up to its desired pressure by the propellant gas which is either present in the pressure-tight container or is supplied to it from the pressure flask via the inlet valve. Instead of using a pressure flask, several gas cartridges can also be used as a pressure source in order to obtain the desired pressure. With the device with an air compressor or pressure tank, the tyre is pumped up to its desired pressure with air which is supplied to the tyre via the pressure-tight container. With bicycles, an air pump can also be used.

Depending on the power of the compressor and depending on the nature and size of the tyre defect, the pumping up process can also be omitted after sealing.

With all embodiments of the apparatus according to the invention preferably a sealing preparation can be used which contains natural rubber latex or rubber latex together with an adhesive compatible with the rubber latex. Such sealing preparations result in better sealing than the prior art commercially available sealing preparations. The sealing preparations are more difficult to mechanically remove from the tyre, seal better under wet conditions and result in a good seal, even for punctures at the edge of the breaker strip.

For the adhesive resin "compatible" signifies that the adhesive resin does not cause any coagulation of the rubber latex. As adhesive resins there are to be understood resins which improve the ability of the rubber latex to bond to the tyre. By way of example, resins can be used which are added to elastomers as tackifiers. The adhesives resins are preferably added in the form of aqueous dispersions or emulsions of rubber latex. As a rule, these are aqueous dispersions. Particularly preferred are terpene-phenol-resins.

Latex which has been concentrated by centrifuging or vaporisation can also be used as natural rubber latex.

In the embodiment without the addition of adhesive resin, a part of the natural rubber latex can be replaced by lattices of synthetic rubbers, such as for example styrene butadiene rubber, acryl nitrile butadiene rubber, ethylenevinylacetate rubber, chloroprene rubber, vinylpyridene rubber, butyl rubber and others as well as their mixtures. The content of natural rubber latex then amounts to 10 to 80R by weight, in particular to 40 to 60% by weight of the rubber latex. The sealing preparation preferably contains only natural rubber latex as the rubber latex.

In the embodiment in which an adhesive resin is contained in the sealing preparation, lattices of natural rubber and of synthetic rubbers, such as, for example, styrene butadiene rubber, acryl nitrile butadiene rubber, ethylenevinylacetate rubber, chloroprene rubber, vinylpyridene rubber, butyl rubber and others can be used as well as their mixtures. Preferred are mixtures of natural rubber with the said lattices of synthetic rubbers and it is particularly preferred if only natural rubber latex is contained as rubber latex in the sealing preparation.

In the sealing preparations, which contain an adhesive resin, the ratio by weight of rubber to adhesive resins preferably lies in the range from about 10:1 to 1:10, more preferably from 5:1 to 1:3 and particularly preferably from 4:1 to 1:1.

A frost protection agent is preferably added to the sealing preparations. Customary frost protection agents can be used, such as high boiling point, water soluble, difficult to ignite organic liquids, such as glycols, preferably ethylene glycol.

For the thinning of the sealing preparations, a dispersion agent can be used, as a rule water. The sealing preparations may contain customary dispersants, emulsifying agents, foam stabilisers, pH-regulators, such as ammonia or sodium hydroxid and/or fillers. Fillers can be of advantage for the sealing of larger holes.

The apparatuses of the invention can be used for the sealing of pneumatic tyres of all types, including bicycles, motorcycles, motorcars, commercial vehicles, industrial vehicles, wheelchairs, caravans, agricultural and garden vehicles, wheelbarrows, and so on.

The invention will now be described in more detail with reference to the drawings and to the embodiment. In the drawings there are shown:
Figure 1 a schematic illustration of an embodiment in accordance with the invention in which the pressure-tight container is shown in section; and
Figure 2 a schematic illustration of another embodiment in accordance with the invention in which the pressure-tight container is shown in section.

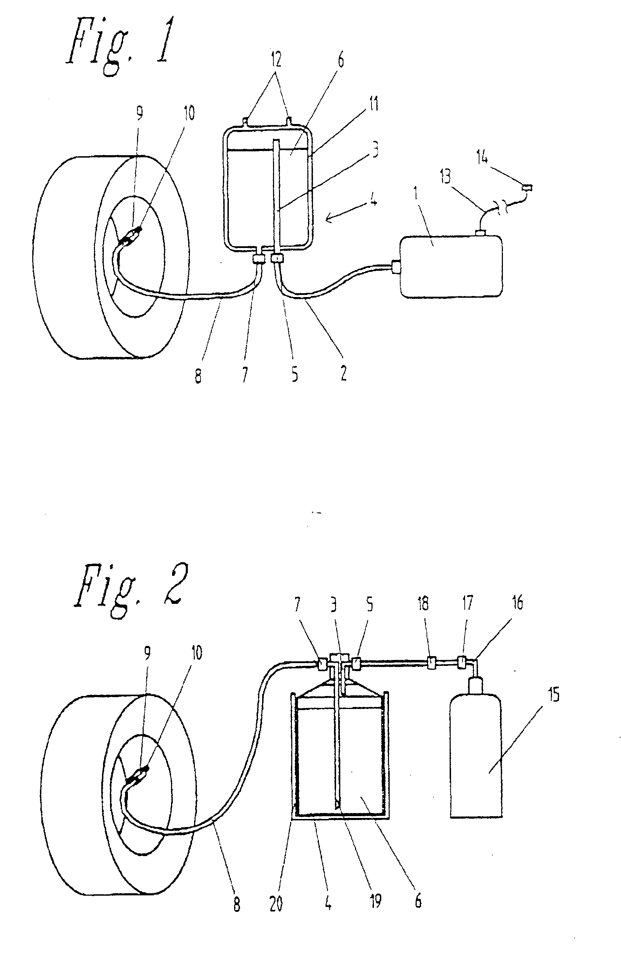

The embodiment shown in Figure 1 operates with a small air compressor 1 as a pressure source. The air compressor is connected via the hose 2 to the gas inlet 3 of the pressure-tight container 4. The gas inlet 3 is closable via a shut-off valve 5 and formed as a riser tube which extends above the liquid level of the sealing preparation 6 in the pressure-tight container 4. The pressure-tight container 4 is furthermore provided with an outlet valve 7 for the sealing preparation 6. A hose 8 is connected to the outlet valve 7 and carries at its end a threaded adapter 9 with which the hose 8 can also be screwed onto the tyre valve 10.

The pressure-tight container is provided with a water-filled jacket 11 which has filling stubs 12. Calcium chloride can be filled into this filling stub 12 as required. If the sealing preparation has frozen up at lower temperatures, then it can be heated up in this way, by the heat of hydration which is liberated, to a temperature at which it is able to operate. The air compressor 1 is provided with an electrical cabled 13, the plug 14 of which fits into the cigarette lighter.

When there is a puncture, the screw adapter 9 is screwed onto the tyre valve 10, the air compressor is connected to the cigarette lighter and the shut-off valve 5 at the gas inlet of the pressure-tight container 4 is opened. The compressed air introduced via the gas inlet 3 into the container 4 presses the sealing preparation 6 through the outlet valve 7 and the tyre valve 10 into the tyre interior. Thereafter, the air flows into the interior of the tyre and pumps the tyre up to a specific pressure. Thereafter, the screw adapter 9 is unscrewed from the tyre valve 10 and the air compressor 1 is stopped. After the tyre has been run to distribute the sealant in the tyre and for the sealing of the same, the device is reconnected and the tyre is pumped up again to its desired pressured.

Figure 2 shows another embodiment in which parts identical to Figure 1 are designated with the same reference numerals. In this device a pressure flask 15 is provided at the pressure source and contains dinitrogenoxide or sulphur hexafluoride as the propellant gas. The pressure flask with the liquefied propellant gas is provided with a gas outlet 16 in which are located a shut-off valve 17, by which the throughflow quantity of the propellant gas can be simultaneously set, and also a pressure relief valve 18. The gas outlet 16 is connected to the gas inlet 3 at the pressure-tight container 4. The outlet valve 7 for the sealing preparation 6 is connected to a riser tube 19. Furthermore, the pressure-tight container 4 stands in a vessel 20, the wall of which is filled with water or can be filled with water to which calcium chloride can be added if required in order to heat up the sealing preparation 6.

The manner of operation of this embodiment corresponds to that of Figure 1 with the exception that the propellant gas flows into the pressure-tight container 4 on opening of the shut-off valve 17 and presses the sealing preparation 6 through the riser tube 19, the outlet valve 7 and the tyre valve 10 into the tyre. Naturally, a jacket 11 at the pressure-tight container 4 which can be filled with water and also the vessel 20 in Figure 2 can be dispensed with when the sealing preparation 6 does not freeze up at low temperatures.

### Example

300g of natural rubber latex with a rubber content of 60% by weight which contains ammonia as a pH-regulator were mixed by stirring with 120g of terpen phenol resin dispersion with a resin content of 55% by weight (Dermulsene^{®}). 67g of ethylene glycol was added to the mixture and all was mixed well. The solid component of the mixture amounted to 246g.

This mixture was tested in a device, such as can be seen in Figure 1 with the exception that the pressure-tight container had no jacket to be filled with water, since the sealing preparation is also capable of operating at low temperatures.

The sealing preparation was tested under various test conditions. For the test, a 195/65 R15 ***DUNLOP***^{®} **SP9** tyre was used which was tested on a testing drum and on the road.

The testing drum was a CFM machine with a drum diameter of 2m and a test load of 500 daN. The type and location of the defect and the more detailed test conditions at which the tyre was tested with the two sealing preparations are set forth in the following Table 1.

During the road test an Audi Quattro A4 with a 2.8 1 engine was used. More precise details of the test conditions are likewise given in Table 1.

For the comparison, the best sealing preparation available on the market was used which contains chloroprene as rubber, water as a carrier agent and propane, butane as a propellant in a spray can.

The test results are summarised in the following Table 1.

**TABLE 1**

| Defect | Location of test | Weather conditions | Test speeds | Test distance | Sealing preparation | Results |
|---|---|---|---|---|---|---|
| 4mm spike in the tread surface | CFM-machine | Dry | 50 km/h | 20 km | Example | Sealed |
| | | | | | Commercial product | Sealed |
| 4mm spike in the tread surface | CFM-machine | Wet | 50 km/h | 20 km | Example | Sealed |
| | | | | | Commercial product | Sealed |
| 4,5mm screw in the undertread rubber run-out | Road test | Dry | Various speeds | 40 km (only in the example) | Example | Sealed |
| | | | | | Commercial product | No seal |
| 4,5mm screw in the undertread rubber run-out | Road test | Wet | Various speeds | 40 km (only in the example) | Example | Sealed |
| | | | | | Commercial product | No seal |
| 4mm spike in the undertread rubber run-out, water in the tyre | Road test | Dry | Various speeds | 40 km (only in the example) | Example | Sealed |
| | | | | | Commercial product | No seal |
| 4mm spike in the undertread rubber run-out | Road test | Dry | Various speeds | 40 km (only in the example) | Example | Sealed |
| | | | | | Commercial product (double quantity) | Only initial seal |

The sealing preparation was additionally tested under the test conditions summarised in the Table 2 and in each case a seal was achieved.

**TABLE 2**

| Defect | Location of test | Test conditions |
|---|---|---|
| 4mm spike in the tread surface | CFM-machine | Fast-running test at 170km/h; camber 4° |
| 4mm spike in the tread surface | CFM-machine | Fast-running test at 260km/h, 3'; camber 4° |
| 4mm spike in the tread surface | CFM-machine | Fast-running test at 250km/h, 4'; camber 4° |
| 4mm spike in the tread surface | CFM-machine | Speed: 100km/h |
| | | Test distance: 2796km |
| 4mm spike in the tread surface | CFM-machine | Speed: 100km/h |
| | | Test distance: 2400km; camber 4° |
| | | Oblique running: 1° |

The sealing preparation can be used at high and low temperatures.

## Claims

1. An apparatus for the sealing off of and pumping up of tyres with tyre troubles comprising a pressure-tight container (4) containing a sealing preparation (6) and having an outlet for the sealing preparation (6) and a gas inlet (3) arranged adjacent to one another and a pressure source with which gas under pressure can be introduced into the pressure-tight container (4) via the gas inlet (3), **characterised in that** the gas inlet (3) and the outlet for the sealing preparation (6) are arranged at the bottom end face of the pressure-tight container (4) on the base side in the operating state of the apparatus.

2. An apparatus in accordance with claim 1, **characterised in that** the pressure source is an air compressor (1).

3. An apparatus in accordance with claim 1, **characterised in that** the pressure source is at least one pressure bottle (15) with liquefied or compressed gas.

4. An apparatus for the sealing off of and pumping up of tyres with tyre troubles comprising a pressure-tight container (4) containing a sealing preparation (6) and having an outlet for the sealing preparation (6) and a gas inlet (3) and a pressure source, **characterised in that** the pressure-tight container (4) has a projected portion projected therefrom, both the outlet and the gas inlet (3) being through the projected portion and communicate with an inside of the pressure-tight container, and **in that** the pressure source is arranged so as to introduce a gas under pressure into the pressure-tight container (4) via the gas inlet (3), such that the sealing preparation is flowed into the interior of the tire.

5. An apparatus in accordance with one of the preceding claims; **characterised by** a source of heat for heating up the sealing preparation (6) in the pressure-tight container (4) and/or the heating up of the pressure source.

6. An apparatus in accordance with claim 5, **characterised in that** the heat source is a heated cushion with resistance to heating.

7. An apparatus in accordance with claim 5, **characterised in that** the heat source has at least two substances separated from one another which release reaction heat when mixed.

8. An apparatus in accordance with claim 5, **characterised in that** the heat source is a latent heat store which releases heat when it is converted.

## Patentansprüche

1. Vorrichtung zum Abdichten und Aufpumpen von Reifen mit Reifenproblemen, umfassend einen druckdichten Behälter (4), der ein Abdichtmittel (6) enthält und einen Auslass für das Abdichtmittel (6) und einen Gaseinlass (3), die benachbart zueinander angeordnet sind, aufweist, und eine Druckquelle, mit welcher Gas unter Druck in den druckdichten Behälter (4) über den Gaseinlass (3) eingeleitet werden kann,
**dadurch gekennzeichnet, dass** der Gaseinlass (3) und der Auslass für das Abdichtmittel (6) im Betriebszustand der Vorrichtung auf der Unterseite an der unteren Stirnfläche des druckdichten Behälters (4) angeordnet sind.

2. Vorrichtung nach Anspruch 1,
**dadurch gekennzeichnet, dass** die Druckquelle ein Luftkompressor (1) ist.

3. Vorrichtung nach Anspruch 1,
**dadurch gekennzeichnet, dass** die Druckquelle zumindest eine Druckflasche (15) mit verflüssigtem oder komprimiertem Gas ist.

4. Vorrichtung zum Abdichten und Aufpumpen von Reifen mit Reifenproblemen, umfassend einen druckdichten Behälter (4), der ein Abdichtmittel (6) enthält und einen Auslass für das Abdichtmittel (6) und einen Gaseinlass (3) aufweist, und eine Druckquelle,
**dadurch gekennzeichnet, dass** der druckdichte Behälter (4) einen Vorsprungabschnitt aufweist, der von diesem vorspringt, wobei sowohl der Auslass als auch der Gaseinlass (3) durch den Vorsprungabschnitt gehen und mit einem Inneren des druckdichten Behälters kommunizieren, und dass die Druckquelle derart eingerichtet ist, dass ein Gas unter Druck in den druckdichten Behälter (4) über den Gaseinlass (3) eingeleitet wird, so dass das Abdichtmittel in das Innere des Reifens einströmen gelassen wird.

5. Vorrichtung nach einem der vorhergehenden Ansprüche,
**gekennzeichnet durch** eine Wärmequelle zum Erwärmen des Abdichtmittels (6) in dem druckdichten Behälter (4) und/oder zum Erwärmen der Druckquelle.

6. Vorrichtung nach Anspruch 5,
**dadurch gekennzeichnet, dass** die Wärmequelle ein beheiztes Kissen mit einem Widerstand für ein Erwärmen ist.

7. Vorrichtung nach Anspruch 5,
**dadurch gekennzeichnet, dass** die Wärmequelle zumindest zwei Substanzen aufweist, die voneinander getrennt sind, die, wenn sie gemischt werden, Reaktionswärme freigeben.

8. Vorrichtung nach Anspruch 5,
**dadurch gekennzeichnet, dass** die Wärmequelle ein Speicher latenter Wärme ist, der Wärme freigibt, wenn er umgewandelt wird.

## Revendications

1. Appareil pour étancher et pour gonfler des bandages pneumatiques présentant des problèmes, comprenant un conteneur étanche à la pression (4) contenant une préparation d'étanchement (6) et ayant une sortie pour la préparation d'étanchement (6) et une entrée de gaz (3) agencées adjacentes l'une à l'autre, et une source de pression avec laquelle un gaz sous pression peut être introduit dans le conteneur étanche à la pression (4) via l'entrée de gaz (3),
**caractérisé en ce que** l'entrée de gaz (3) et la sortie pour la préparation d'étanchement (6) sont agencées à la face d'extrémité au fond du conteneur étanche à la pression (4) sur le côté de base pour l'état de fonctionnement de l'appareil.

2. Appareil selon la revendication 1, **caractérisé en ce que** la source de pression est un compresseur d'air (1).

3. Appareil selon la revendication 1, **caractérisé en ce que** la source de pression est au moins une bouteille sous pression (15) avec un gaz liquéfié ou comprimé.

4. Appareil pour étancher et pour gonfler des bandages pneumatiques présentant des problèmes, comprenant un conteneur étanche à la pression (4) contenant une préparation d'étanchement (6), et ayant une sortie pour la préparation d'étanchement (6) et une entrée de gaz (3) et une source de pression, **caractérisé en ce que** le conteneur étanche à la pression (4) possède une portion en projection qui se projette de lui-même, la sortie et l'entrée de gaz (3) étant toutes deux à travers la portion en projection et communiquant avec un intérieur du conteneur étanche à la pression, et **en ce que** la source de pression est agencée de manière à introduire un gaz sous pression dans le conteneur étanche à la pression (4) via l'entrée de gaz (3), de telle manière que la préparation d'étanchement est amenée à s'écouler vers l'intérieur du pneumatique.

5. Appareil selon l'une des revendications précédentes, **caractérisé par** une source de chaleur pour chauffer la préparation d'étanchement (6) dans le conteneur étanche à la pression (4) et/ou pour chauffer la source de pression.

6. Appareil selon la revendication 5, **caractérisé en ce que** la source de chaleur est un coussin chauffé avec une résistance de chauffage.

7. Appareil selon la revendication 5, **caractérisé en ce que** la source de chaleur comprend au moins deux substances séparées l'une de l'autre et qui dégagent une chaleur de réaction lorsqu'elles sont mélangées.

8. Appareil selon la revendication 5, **caractérisé en ce que** la source de chaleur est un stockage de chaleur latente qui dégage de la chaleur lorsqu'il est converti.
